# EUROPÄISCHE PATENTANMELDUNG

(11) **EP 1 961 631 A2**
(43) Veröffentlichungstag der Anmeldung: **27.08.2008**
(21) Anmeldenummer: 07122619.5
(22) Anmeldetag: 07.12.2007
(51) Int. Cl.: B60S 1/24

(54) **Scheibenwischvorrichtung mit einer verbesserten Gestaltung der Welle-Nabe-Verbindungen**

(30) Priorität: 30.01.2007 DE 102007004566
(71) Anmelder: Robert Bosch GmbH, 70442 Stuttgart (DE)
(72) Erfinder: Knauf, Richard, 67480 Roppenheim (FR)

(57) **Zusammenfassung**

Scheibenwischvorrichtung, insbesondere für ein Kraftfahrzeug, mit wenigstens einer Welle-Nabe- Verbindung (1) zur Übertragung der Wischerbewegung zwischen einer sich in einer Wellenachse (2) drehenden oder eine Pendelbewegung ausführenden Welle (3) und einer Nabe (4), wobei die Welle- Nabe- Verbindung durch einen Wellenabschnitt (3) mit einer außenseitigen Polygonkontur (5) gebildet ist, die mit einer in der Nabe (4) eingebrachten innenseitigen Polygonkontur eine formschlüssige Verbindung bildet.

## Beschreibung

Die vorliegende Erfindung betrifft eine Scheibenwischvorrichtung, insbesondere für ein Kraftfahrzeug, mit wenigstens einer Welle-Nabe-Verbindung zur Übertragung der Wischerbewegung zwischen einer sich in einer Wellenachse drehenden oder eine Pendelbewegung ausführenden Welle und einer Nabe.

### Stand der Technik

Allgemein bekannt sind Scheibenwischvorrichtungen, die eine Motorgetriebeeinheit umfassen, aus der sich eine Abtriebswelle heraus erstreckt. Diese Welle führt entweder eine kontinuierliche und in einer Drehrichtung laufende Drehbewegung aus, oder das Getriebe ist derart ausgebildet, dass die Abtriebswelle bereits eine Pendelbewegung ausführt. Diese Pendelbewegung wird über ein aus einem Gestänge gebildeten Getriebe auf die Wischarme übertragen. Dafür sind in der Frontseite des Kraftfahrzeugs eine oder mehrere Wischerwellen drehbar gelagert, auf denen außenseitig der Wischarm über ein Befestigungsteil aufgebracht wird. Dabei erfordert die Scheibenwischvorrichtung häufig mehrere Welle-Nabe-Verbindungen, um beispielsweise auf die Abtriebswelle der Motorgetriebeeinheit eine Motorkurbel zu befestigen oder eine Verbindung zwischen dem Befestigungsteil des Wischarms und der Wischerwelle zu bilden.

Derartige Welle-Nabe-Verbindungen sind aus dem Stand der Technik bereits bekannt. Die Offenlegungsschrift DE 102 34 613 A1 offenbart eine Scheibenwischvorrichtung, insbesondere für Kraftfahrzeuge, welche eine Wischerwelle mit einem Konus aufweist, an der ein Wischerarm befestigbar ist, wobei der Konus eine makroskopische Struktur aufweist. Die Grundstruktur des Konus ist durch eine Rändeloberfläche gebildet, um eine formschlüssige Verbindung zur Übertragung des Drehmomentes zwischen der Wischerwelle und der Nabe zu bilden. Die der Rändeloberfläche überlagerte makroskopische Struktur erhöht den Aufpressdruck des Wischerarms auf die Wischerwelle, da die Kontaktfläche zwischen dem Konus und der Nabe verringert wird. Die makroskopische Struktur ist dabei auf verschiedene Weise ausgebildet, so dass beispielsweise zahnartige oder kantenartige Spitzen innerhalb des Konus gebildet werden, die sich in das Material der Nabe hineindrücken, um einen Formschluss zu bilden.

Die Offenlegungsschrift DE 103 52 468 A1 offenbart eine Scheibenwischvorrichtung mit einer Wischerwelle, die einen Konus aufweist, auf den eine Antriebskurbel aufgebracht ist, um die Pendelbewegung auf die Wischarme zu übertragen. Ferner wird die Ausbildung des Gestänges deutlich, um die Bewegung der Wischerarme von der Motorgetriebeeinheit auf die Wischerwelle zu leiten. Hier ist wenigstens eine Kurbel vorgesehen, welche durch die Abtriebswelle der Motorgetriebeeinheit in eine Drehbewegung versetzt wird. Die Welle-Nabe-Verbindung zwischen der Abtriebswelle der Motorgetriebeeinheit und der Kurbel ist ebenfalls über eine Konusverbindung hergestellt. Damit wird deutlich, dass die gattungsgemäße Scheibenwischvorrichtung mehrere Welle-Nabe-Verbindungen umfassen kann, die auf unterschiedliche Weise ausgebildet sein können.

Bei den gemäß dem Stand der Technik bekannten Welle- Nabe- Verbindungen entsteht das Problem, dass die axiale Aufpresskraft der Nabe auf den Konus vergleichsweise hoch sein muss. Daher werden Schraubenmuttern vorgesehen, die auf einem endseitig auf der Welle angeformten Gewindeabschnitt aufgeschraubt werden. Erst durch das Festziehen der Schraubenmuttern wird die Nabe auf den Konus axial aufgeschoben. Dabei kann sich die Rändeloberfläche des Konus in die Innenseite der Nabe einschneiden, um einen gewissen Formschluss zu erreichen. Dies kann durch eine leichte plastische Verformung des Materials in der Innenseite der Nabe erzeugt werden. Nachteilhaft ist dabei, dass die Bauhöhe der Welle zumindest durch die Höhe der Gewindeanformung und der darauf angeordneten Schraubenmutter sehr groß wird. In Abhängigkeit von den Einbauverhältnissen ist diese erforderliche Bauhöhe störend, was insbesondere bei der Welle-Nabe-Verbindung zwischen der Abtriebswelle der Motorgetriebeeinheit und der Kurbel des das Gestänge umfassende Getriebe der Scheibenwischvorrichtung festgestellt werden muss.

Es ist daher die Aufgaben der vorliegenden Erfindung, eine Scheibenwischvorrichtung mit einer verbesserten Gestaltung der Welle-Nabe-Verbindung zu schaffen, welche die Nachteile des Standes der Technik überwindet und eine geringe Bauhöhe aufweist.

### Offenbarung der Erfindung

Diese Aufgabe wird ausgehend von einer Scheibenwischvorrichtung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Welle- Nabe- Verbindung durch einen Wellenabschnitt mit einer außenseitigen Polygonkontur gebildet ist, die mit einer in der Nabe eingebrachten innenseitigen Polygonkontur eine formschlüssige Verbindung bildet.

Die Erfindung geht dabei von dem Gedanken aus, die Welle-Nabe-Verbindung lediglich über eine makroskopische Struktur zu schaffen. Auf eine gerändelte Oberfläche zur formschlüssigen Verbindung des Konus mit der Nabe wird verzichtet, so dass die Oberfläche des Konus sowie die Innenfläche der Nabe glatt ausgeführt sein können. Das Polygon bietet eine geeignete geometrische Form zur Übertragung großer Drehmomente, so dass die Welle-Nabe-Verbindung weder verschleißträchtig, noch bei vielen Löse- bzw. Montagevorgängen eine Verschlechterung der Verbindungsqualität erfährt. Zusätzlich kann die Nabe lediglich in der Anzahl an Positionen auf die Welle aufgesetzt werden, die der Anzahl der Kanten des Polygons entspricht. Damit ist gewährleistet, dass bei der Montage der Nabe auf der Welle die richtige Position gewählt wird, da eine Änderung der Position lediglich in großen Winkelbereichen möglich ist. Dies trifft insbesondere auf die Montage des Wischarms bzw. des Befestigungsteils des Wischarms auf der Wischerwelle zu, so dass der Scheibenwischer auf zuverlässige Weise die richtige Position einnimmt.

Eine vorteilhafte Ausführungsform des Wellenabschnittes mit der außenseitigen Polygonkontur sieht vor, dass der Polygonkontur eine sich in Richtung der Wischerachse erstreckende Konuskontur überlagert ist. Die Konuskontur beschreibt eine sich in einer Richtung der Wellenachse verjüngende Kontur, so dass aus dieser Richtung die Nabe montierbar ist. Indem die Nabe ebenfalls eine Konuskontur aufweist, kann diese auf die Polygonkontur aufgeschoben werden, bis diese eine spielfreie Position auf der außenseitigen Polygonkontur der Welle einnimmt. Durch das spielfreie Verbinden der jeweiligen Polygonkonturen kann auf sehr enge und aufwendig herzustellende Fertigungstoleranzen verzichtet werden. Durch die spielfreie Welle-Nabe-Verbindung ist diese überdies verschleißfrei. Der Konuswinkel der Konuskontur kann so gewählt werden, dass diese nicht selbsthemmend ist oder wenigstens leicht wieder getrennt werden kann. Ferner sollte der Konus jedoch so flach ausgeführt werden, dass bei einer geringen axialen Aufpresskraft eine große radiale Effektivkraft erzeugt wird, um eine fest sitzende Welle-Nabe-Verbindung zu schaffen.

Vorteilhafterweise ist die Polygonkontur als dreiseitiges Polygon ausgebildet. Es ist jedoch auch ein vier- ein fünf oder ein mehrseitiges Polygon möglich, so dass die jeweiligen Polygonkanten in ihrer Anzahl zunehmen und die Polygonflächen jeweils kleiner ausgebildet sind. Eine optimale Anzahl der das Polygon bildenden Kanten kann davon abhängig gemacht werden, welches Fertigungsverfahren zur Herstellung der Polygonkontur vorgesehen wird. Wird die Polygonkontur beispielsweise mittels eines Fließpressverfahrens, und insbesondere eines Kaltfließpressverfahrens hergestellt, so sind bei einer großen Anzahl von Polygonkanten geringere Umformgrade vorteilhaft.

Eine weitere vorteilhafte Ausgestaltung der Polygonkontur sieht vor, dass diese in Gestalt eines konvexen Bogenpolygons ausgebildet ist. Damit werden die Polygonkanten nicht durch Geraden gebildet, sondern durch nach außen gerichtete bogenförmige Konturen. Es sei darauf hingewiesen, dass das erfindungsgemäße Polygon der DIN 32711 (Polygonprofil P3G, DIN März 1979) entsprechen kann.

Vorteilhafterweise umfasst die Welle einen endseitigen Nutenabschnitt, in welchen ein ringförmiges Sicherungselement einrastbar ist, um die Nabe in axialer Richtung auf der Welle zu sichern. Ist die Nabe auf der Welle gefügt, so kann abschließend das Sicherungselement in eine Nut eingefügt werden, welche im Nutenabschnitt ausgebildet ist. Das Sicherungselement kann daher beispielsweise ein Sprengring, ein Sicherungsring nach DIN 472, ein Sicherungsring für Wellen nach DIN 471 oder eine Sicherungsscheibe nach DIN 6799 sein. Unabhängig von der geometrischen Ausgestaltung des Sicherungselementes sollte dieses lediglich selbsthaltend auf der Welle montierbar sein, und hinreichende Axialkräfte aufnehmen können.

Eine weitere vorteilhafte Ausgestaltung der axialen Sicherung der Nabe auf dem die Polygonkontur umfassenden Wellenabschnitt wird dadurch erreicht, dass zwischen dem Sicherungselement und der Nabe ein ringförmiges Federelement mit einer axialen Einfederbarkeit angeordnet ist, um die Nabe in axialer Richtung auf der Welle vorzuspannen. Durch das Federelement wird die Welle auf den konusförmigen Polygonabschnitt aufgeschoben, so dass eine Spielfreiheit erreicht wird. Das Federelement mit der axialen Einfederbarkeit kann in Gestalt einer Tellerfeder oder einer Spannscheibe ausgeführt werden, welche im montierten Zustand eine Vorspannung auf die Nabe ausübt, um diese auf die sich verdickende Richtung der Konuskontur zu schieben. Die axiale Vorspannkraft sollte in der Höhe derart ausgebildet sein, dass sich die Nabe nicht von der Polygonkontur löst, und der Passsitz aufrecht erhalten wird.

Eine bevorzugte Anwendung der erfindungsgemäßen Welle- Nabe- Verbindung kann erreicht werden, in dem diese zwischen der Motorgetriebewelle und der Motorkurbel angeordnet wird. Scheibenwischvorrichtungen umfassen gewöhnlich eine Motorgetriebeeinheit mit einer Motorgetriebewelle sowie einer an dieser angeordneten Motorkurbel. Die Motorkurbel wird entweder in einer Pendelbewegung angetrieben, oder läuft kontinuierlich und gleichsinnig um. Um eine geringe Bauhöhe der Welle-Nabe-Verbindung zwischen der Motorgetriebewelle und der Motorkurbel zu bilden, kann die Polygonkontur auf der Motorgetriebewelle ausgebildet sein, wobei im Nabenabschnitt der Motorkurbel die Gegenkontur der erfindungsgemäßen Polygonkontur eingebracht ist. Damit wird die Motorkurbel fest auf der Motorgetriebewelle angeordnet, und mittels des Sicherungselements sowie des ringförmigen Federelementes gesichert.

Eine weitere Möglichkeit der Anwendung der erfindungsgemäßen Welle-Nabe-Verbindung kann zwischen der Wischerwelle und dem Befestigungsteil des Wischarms geschaffen werden. Scheibenwischvorrichtungen umfassen eine Wischerwelle, welche sich aus der Stirnwand des Kraftfahrzeugs heraus erstreckt, und auf der der Wischarm mittels eines Befestigungsteils angeordnet wird. Die Wischerwelle führt die Pendelbewegung aus, die auf den Wischarm übertragen werden muss. Die erfindungsgemäße Polygonkontur mit der überlagerten Konuskontur kann endseitig an der Wischerwelle ausgebildet sein, so dass das Befestigungsteil entsprechend über das Polygon drehmomentübertragend angeordnet werden kann.

Weitere, die Erfindung verbessernde Maßnahmen werden nachstehend gemeinsam mit der Beschreibung eines bevorzugten Ausführungsbeispiels der Erfindung anhand der Figuren näher dargestellt.

### Ausführungsbeispiel

Es zeigt:
- Figur 1: eine Seitenansicht einer Motorgetriebeeinheit mit einer Welle sowie einer auf dieser angeordneten Nabe;
- Figur 2: eine Detailansicht der Welle, welche eine erfindungsgemäße Polygonkontur umfasst; und
- Figur 3: eine Draufsicht auf die Welle, welche in Figur 2 dargestellt ist.

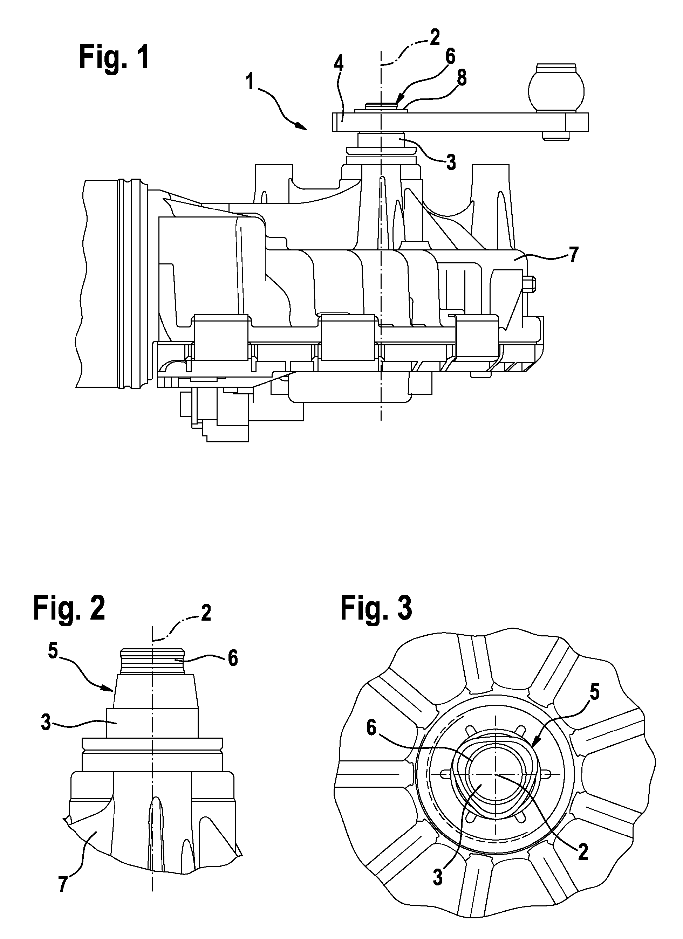

In Figur 1 ist eine Welle-Nabe-Verbindung 1 dargestellt, welche eine Welle 3 mit einer Nabe 4 verbindet. Die Welle 3 ist als Motorgetriebewelle einer Motorgetriebeeinheit 7 ausgebildet, auf der eine Motorkurbel aufgenommen ist. Die Motorkurbel weist einen Abschnitt auf, der die Nabe 4 bildet. Endseitig auf der Motorgetriebewelle ist ein Sicherungselement 8 dargestellt, um die Nabe 4 auf der Welle 3 axial zu sichern. Das Sicherungselement 8 ist in einem Nutenabschnitt 6 eingeschoben, und bildet durch den damit erzeugten Formschluss die Axialsicherung der Nabe 4. Mit der erfindungsgemäßen Ausgestaltung der Welle-Nabe-Verbindung 1 ist die effektive Bauhöhe der Verbindung in Richtung der Wellenachse 2 minimiert. Gemäß der Darstellung ist lediglich das flach ausgebildete Sicherungselement 8 erforderlich, welches in Richtung der Wellenachse 2 nur eine sehr geringe Erstreckung aufweist.

Figur 2 zeigt eine Seitenansicht der Welle 3, welche sich aus der Motorgetriebeeinheit 7 in Richtung der Wellenachse 2 heraus erstreckt. Gemäß der Darstellung ist die Polygonkontur 5 erkennbar, welche mit einer Konuskontur überlagert ist, was an der Schrägung der Polygonkontur 5 in Richtung des Nutenabschnittes 6 erkennbar ist. Somit wird das Ende der Welle 3 zunächst durch die Polygonkontur 5 und abschließend mit dem Nutenabschnitt 6 zur Aufnahme eines Sicherungselementes gebildet.

Figur 3 zeigt eine Draufsicht auf die Welle 3 aus Richtung der Wellenachse 2. In der Ansicht ist erkennbar, dass die Polygonkontur in Gestalt eines dreiseitigen Polygons ausgebildet ist, wobei das Polygon ein Bogenpolygon ist, welches keine Kanten aufweist, sondern an ihren Erhebungen entsprechende Radien umfasst. Die tragenden, d.h. die das Drehmoment übertragenden Bereiche werden durch die Flanken der bogenartigen Abschnitte der Polygonkontur gebildet, so dass insbesondere bei der Ausgestaltung der Polygonkontur als dreiseitiges Bogenpolygon sehr hohe Drehmomente übertragbar sind, da nur geringe Flächenpressungen in den tragenden Bereichen auftreten.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Insbesondere beschränkt sich die Erfindung nicht auf Welle-Nabe-Verbindungen, die lediglich die Motorgetriebewelle sowie die auf dieser angeordneten Motorkurbel betreffen, sondern die erfindungsgemäße Verbindung kann neben der Verbindung des Befestigungsteils auf der Wischerwelle jede weitere Welle-Nabe-Verbindung einer Scheibenwischvorrichtung betreffen. Insbesondere sind aus Gestängen gebildete Getriebe bekannt, um die Pendelbewegung von der Motorgetriebeeinheit auf die Wischarme zu übertragen, welche mehrfache Welle-Nabe-Verbindungen umfassen, die erfindungsgemäß ausgeführt sein können.

## Patentansprüche

1. Scheibenwischvorrichtung, insbesondere für ein Kraftfahrzeug, mit wenigstens einer Welle- Nabe- Verbindung (1) zur Übertragung der Wischerbewegung zwischen einer sich in einer Wellenachse (2) drehenden oder eine Pendelbewegung ausführenden Welle (3) und einer Nabe (4),
**dadurch gekennzeichnet, dass** die Welle- Nabe- Verbindung durch einen Wellenabschnitt (3) mit einer außenseitigen Polygonkontur (5) gebildet ist, die mit einer in der Nabe (4) eingebrachten innenseitigen Polygonkontur eine formschlüssige Verbindung bildet.

2. Scheibenwischvorrichtung nach Anspruch 1,
**dadurch gekennzeichnet, dass** der Polygonkontur (5) eine sich in Richtung der Wellenachse (2) erstreckende Konuskontur überlagert ist.

3. Scheibenwischvorrichtung nach Anspruch 1 oder 2,
**dadurch gekennzeichnet, dass** die Polygonkontur (5) als dreiseitiges Polygon ausgebildet ist.

4. Scheibenwischvorrichtung nach einem der Ansprüche 1 bis 3,
**dadurch gekennzeichnet, dass** die Polygonkontur (5) in Gestalt eines konvexen Bogenpolygons ausgebildet ist.

5. Scheibenwischvorrichtung nach einem der vorgenannten Ansprüche,
**dadurch gekennzeichnet, dass** die Welle (3) einen endseitigen Nutenabschnitt (6) umfasst, in welchen ein ringförmiges Sicherungselement (8) einrastbar ist, um die Nabe (4) in axialer Richtung auf der Welle (3) zu sichern.

6. Scheibenwischvorrichtung nach Anspruch 5,
**dadurch gekennzeichnet, dass** zwischen dem Sicherungselement (8) und der Nabe (4) ein ringförmiges Federelement mit einer axialen Einfederbarkeit angeordnet ist, um die Nabe (4) in axialer Richtung auf der Welle (3) vorzuspannen.

7. Scheibenwischvorrichtung nach einem der vorgenannten Ansprüche,
**dadurch gekennzeichnet, dass** die Scheibenwischvorrichtung eine Motorgetriebeeinheit (7) mit einer Motorgetriebewelle sowie eine an dieser angeordneten Motorkurbel umfasst, und die Welle (3) die Motorgetriebewelle der Motorgetriebeeinheit (7) ist und die Nabe (4) an der Motorkurbel ausgebildet ist.

8. Scheibenwischvorrichtung nach einem der Ansprüche 1 bis 6,
**dadurch gekennzeichnet, dass** die Scheibenwischvorrichtung eine Wischerwelle mit einem an dieser über ein Befestigungsteil angeordneten Wischarm umfasst, und die Welle (3) die Wischwelle ist und die Nabe (4) am Befestigungsteil ausgebildet ist.
